# FASCICULE DE BREVET EUROPEEN

(11) **EP 1 026 063 B1**
(45) Date de publication et mention de la délivrance du brevet: **27.04.2005**
(21) Numéro de dépôt: 00400229.1
(22) Date de dépôt: 28.01.2000
(51) Int. Cl.: B62B 5/00

(54) **Chariot porte-charge et son véhicule d'embarquement**
Lastaufnahmefahrzeug und sein Überladefahrzeug
Load-bearing vehicle and its transfer trolley

(30) Priorité: 02.02.1999 FR 9901169
(43) Date de publication de la demande: 09.08.2000
(73) Titulaire: Armtop, 44117 St. André des Eaux (FR)
(72) Inventeur: Hubschen, Alfred, 44410 Herbignac (FR)
(74) Mandataire: Fosse, Danièle

(56) Documents cités:
- DE-A- 2 635 238
- DE-A- 19 514 912
- FR-A- 2 664 495

## Description

La présente invention concerne un chariot porte-charge embarquable avec sa charge sur une surface de réception en élévation d'un véhicule de transport.

Elle concerne plus particulièrement un chariot porte-charge embarquable constitué d'un plateau porte-charge équipé d'un jeu de roues servant au déplacement du plateau sur la surface de réception en élévation et d'un jeu de pieds porte-roue respectivement avant et arrière, réglables en hauteur et reliés à pivotement au plateau porte-charge pour occuper une position d'appui au sol et une position effacée, chaque paire de pieds porte-roue respectivement avant et arrière étant munie d'un dispositif déverrouillable de blocage des pieds au moins en position déployée.

Un chariot porte-charge de ce type est notamment décrit dans la demande de brevet européen EP-A-0.439.812. De tels chariots porte-charges sont notamment utilisés pour des véhicules de transport dans lesquels des charges doivent être fréquemment chargées dans, ou déchargées du, véhicule, ces opérations de chargement et/ou de déchargement devant être effectuées par une seule personne. De tels chariots porte-charge ont pour objectif de faciliter les opérations de chargement et de déchargement d'un véhicule de transport et notamment de réduire la fatigue physique des opérateurs.

Toutefois, de telles opérations de chargement et de déchargement doivent pouvoir s'effectuer en toute sécurité. Tel n'est pas le cas du chariot porte-charge décrit dans la demande de brevet européenne précitée. En effet, ce chariot porte-charge ne permet pas de garantir de manière sûre un repli des pieds avant du chariot porte-charge du fait de la position de l'organe de déverrouillage du dispositif de blocage des pieds avant en position déployée des pieds d'une part et du fait de l'absence d'un dispositif de sécurité supplémentaire d'autre part.

Ce problème n'est pas par ailleurs résolu par le chariot porte-charge décrit dans la demande de brevet allemand DE-A-3.007.578.

Il en est de même pour le chariot porte-charge décrit dans le brevet DE-195 14 912. Dans ce chariot, le dispositif de réglage en hauteur des roues est constitué d'un système à bouton à ressort de sorte que la hauteur ou longueur des pieds est déterminée au moment du déploiement des pieds. Une fois cette hauteur réglée, elle ne peut plus être modifiée en particulier lorsque le plateau porte-charge est chargé. Il en résulte l'impossibilité de s'adapter à des véhicules dont la garde au sol de la surface de réception en élévation serait différente. De ce fait, le déchargement d'un véhicule en vue d'un chargement dans un autre véhicule à garde au sol différente ne peut pas être envisagé. Par ailleurs, à nouveau, aucun système n'empêche un recul intempestif du chariot lorsque ce dernier est introduit partiellement dans le véhicule et que les pieds avant sont en position effacée. Les mêmes remarques peuvent s'appliquer au chariot porte-charge décrit dans le brevet DE-2.635.238.

Un premier but de la présente invention est de proposer un chariot porte-charge dont la conception permet un déverrouillage automatique des pieds avant de la position déployée à la position effacée dans des conditions telles que toute sortie du chariot au moins partiellement introduit dans le véhicule, en position effacée desdits pieds avant, est empêchée.

Un autre but de la présente invention est de proposer un chariot porte-charge dont la conception empêche toute sortie du chariot du véhicule en position effacée de l'un quelconque des pieds du chariot.

Un autre but de la présente invention est de proposer un chariot porte-charge dont la conception limite les risques d'un effacement des pieds avant du chariot lorsque le plateau du chariot n'est pas en appui.

Un autre but de l'invention est de proposer un chariot porte-charge dont la conception permet une adaptation à des véhicules dont la surface de réception en élévation présente une garde au sol quelconque de manière à permettre le débarquement du chariot d'un véhicule en vue de son embarquement dans un véhicule à garde au sol différente.

Un autre but de la présente invention est de proposer un véhicule d'embarquement d'un tel chariot porte-charge dont la conception autorise une protection du véhicule, en particulier du pare-chocs de ce dernier lors de la manipulation du chariot porte-charge.

A cet effet, l'invention a pour objet un chariot porte-charge embarquable avec sa charge sur une surface de réception en élévation d'un véhicule de transport, ce chariot étant constitué d'un plateau porte-charge équipé d'un jeu d'organes de roulement ou de glissement servant au déplacement du plateau sur la surface de réception en élévation et d'un jeu de pieds porte-roue respectivement avant et arrière, réglables en hauteur et reliés à pivotement au plateau porte-charge pour occuper une position d'appui au sol et une position effacée, les pieds porte-roue avant et arrière étant munis respectivement d'un dispositif déverrouillable de blocage des pieds au moins en position déployée, caractérisé en ce que la paire de pieds avant cinématiquement solidaires et la paire de pieds arrière cinématiquement solidaires sont munies respectivement d'un dispositif de réglage en hauteur différencié mû en fonctionnement dans le sens d'une augmentation ou d'une réduction de la longueur des pieds, à l'état chargé ou non chargé du plateau, par un organe de commande actionné par un opérateur pour obtenir un réglage indépendant de chaque paire de pieds du plateau porte-charge, ce plateau porte-charge étant muni d'une première butée proche de son bord frontal avant pour coopérer avec une butée disposée sur la surface de réception du véhicule et ainsi empêcher le recul intempestif du plateau porte-charge en position effacée des pieds avant, la venue en prise ou respectivement le dégagement desdites butées étant obtenu par réglage de la hauteur d'au moins une paire de pieds.

Grâce à la conception du dispositif de réglage en hauteur de chaque paire de pieds et à la présence de butées, l'effacement automatique des pieds avant du chariot porte-charge peut s'effectuer en toute sécurité sans possibilité de recul du chariot partiellement introduit dans le véhicule car le dégagement des butées ne peut s'effectuer qu'en position non effacée d'appui au sol verrouillé des pieds avant.

L'invention sera bien comprise à la lecture de la description suivante d'exemples de réalisation, en référence aux dessins annexés dans lesquels :
la figure 1 représente une vue en perspective de dessous d'un chariot porte-charge conforme à l'invention, ledit chariot étant positionné sur la tranche du plateau ;
la figure 2 représente une vue en perspective de dessus d'un chariot porte-charge conforme à l'invention ainsi que l'ensemble des éléments nécessaires à l'équipement du véhicule pour la réception d'un tel chariot porte-charge ;
la figure 3 représente une vue en perspective partielle du fonctionnement de l'organe de commande de déverrouillage du dispositif de blocage des pieds avant du chariot porte-charge et
les figures 4A à 4D représentent de manière schématique partielle les différentes étapes de chargement d'un chariot porte-charge conforme à l'invention dans un véhicule.

Le chariot porte-charge, objet de l'invention, est représenté aux figures sous la référence générale 1. Ce chariot porte-charge est constitué de manière en soi connue d'un plateau 2 porte-charge constitué d'une surface plane équipé d'un certain nombre de traverses et de longerons pour la rigidification de ladite surface plane. Ce plateau 2 est lui-même équipé d'un jeu de roues représentées en 3A et 3B aux figures. Ces roues servent au déplacement du plateau 2 sur une surface 17 de réception en élévation constituée par exemple par la plate-forme d'un véhicule de transport de charges. Ce plateau 2 porte-charge est encore équipé d'un jeu de pieds porte-roue respectivement avant et arrière, réglables en hauteur. Les pieds porte-roue avant sont représentés en 4A. Ces pieds porte-roue avant constituent les pieds devant être introduits les premiers sur la surface 17 de réception en élévation lors de l'embarquement du chariot porte-charge avec sa charge sur ladite surface 17 de réception en élévation.

Les pieds avant 4A sont réglables en hauteur dans le sens d'une augmentation ou d'une réduction de leur longueur par l'intermédiaire d'un dispositif approprié tel qu'un dispositif de type écrou/vis sans fin appelé encore vérin mécanique. Le dispositif de réglage en hauteur équipant un pied avant est couplé mécaniquement à l'autre pied avant de manière à rendre les pieds avant cinématiquement solidaires, c'est-à-dire entrainables dans le sens d'une augmentation ou d'une réduction de leur longueur de manière simultanée. L'actionnement de ces vérins mécaniques, en particulier l'entraînement en rotation des vis sans fin, peut s'effectuer au moyen d'une manivelle 15 située sur le bord arrière du chariot et actionnée par un opérateur.

Les pieds arrière 4B sont équipés d'un dispositif de réglage en hauteur analogue.

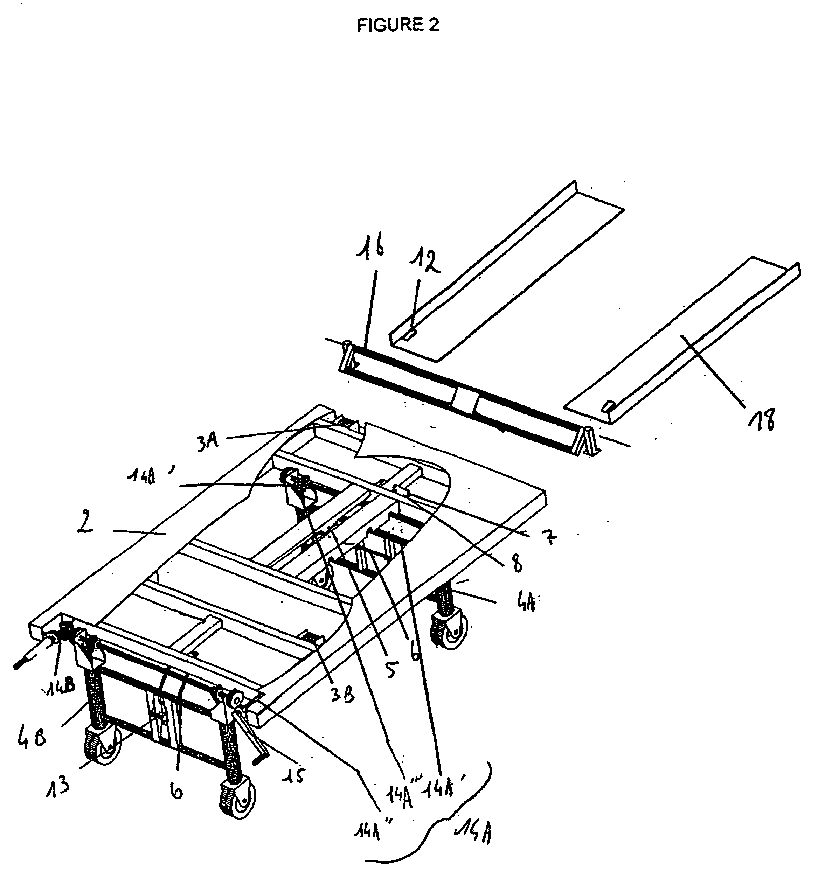

En conséquence, les pieds avant 4A et arrière 4B sont réglables en hauteur par l'intermédiaire de vérins 14A, 14B mécaniques différenciés pour obtenir un réglage indépendant de chaque paire de pieds. Le détail de ces vérins mécaniques est plus particulièrement représenté à la figure 2. Ces vérins mécaniques sont constitués par un jeu de pignons et de systèmes de renvoi d'angle couplés à chaque paire de pieds et actionnés au moyen d'une manivelle ou d'un dispositif électrique, tel qu'un moteur, pour leur entraînement en rotation.

Les pieds porte-roue avant 4A sont par exemple constitués chacun de deux tubes télescopiques animés d'un mouvement relatif axial lors de l'actionnement du vérin mécanique 14A en prise avec l'un desdits tubes. Comme le montre la figure 2, l'actionnement de la manivelle 15 couplée à un arbre porte pignon, représenté en 14A'' à la figure 2, permet l'entraînement en rotation du pignon porté par une tige 14A', ce pignon s'engrenant avec un pignon porté par une tige filetée 14A''' coaxiale au pied et en prise avec le taraudage ou un écrou fixe de l'un des tubes télescopiques constituant l'un des éléments des pieds porte-roue avant. De ce fait, la rotation de la tige filetée génère un déplacement axial du tube fixe ou limité en rotation autour de son axe longitudinal et en prise avec ladite tige filetée. Un système analogue est prévu pour les pieds arrière 4B. Bien évidemment, des organes équivalents, tels qu'un vérin électrique, auraient pu être envisagés. L'intérêt d'un tel dispositif de réglage en hauteur des pieds est de pouvoir agir au moyen d'un mécanisme simple sur la hauteur des pieds à l'état chargé ou non du plateau porte-charge et d'obtenir un réglage en hauteur particulièrement précis de chaque paire de pied. Il est à noter que dans l'exemple représenté, c'est la tige 14A' qui assure l'accouplement entre les vérins mécaniques de chaque pied avant 4A de telle sorte que le réglage en hauteur de chaque pied s'effectue de manière simultanée.

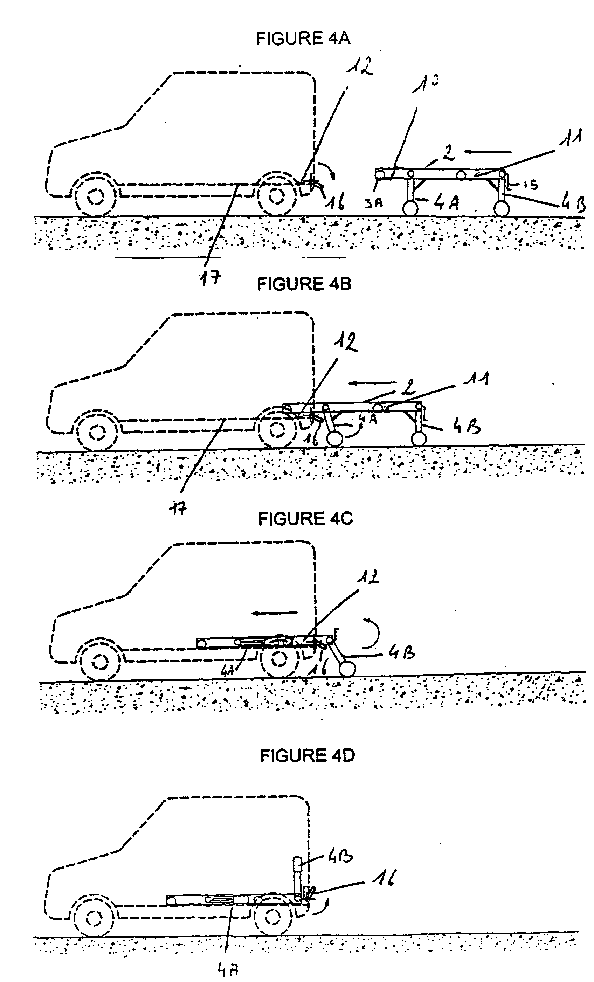

En ce qui concerne les pieds avant 4A, les tubes télescopiques sont conformés de telle sorte que l'un porte une lumière de guidage, l'autre un doigt se déplaçant à l'intérieur de la lumière de guidage lors du déplacement axial desdits tubes télescopiques de sorte que chaque roue avant, montée fixe sur l'un des tubes, passe d'une position parallèle à l'axe longitudinal du plateau, comme représenté à la figure 2, cette position correspondant à la position déployée des pieds avant 4A, à une position orthogonale à l'axe longitudinal du plateau 2 porte-charge en position effacée des pieds, cette position correspondant à celle représentée aux figures 4C et 4D. On note que la manivelle représentée en 15 aux figures peut indifféremment actionner les vérins mécaniques 14B entraînant en déplacement les pieds arrière 4B du véhicule ou les vérins mécaniques 14A entraînant en déplacement les pieds avant 4A du véhicule. Il suffit pour ce faire de coupler la manivelle 15 avec le vérin mécanique correspondant. La manivelle 15 est donc montée amovible sur le chariot. Il aurait toutefois pu être prévu une manivelle 15 unique couplée à un système de débrayage pour pouvoir agir à volonté sur les vérins mécaniques équipant les pieds avant et les pieds arrière. Chaque jeu respectivement avant et arrière de pieds porte-roue est en outre relié à pivotement au plateau 2 porte-charge. Ce déplacement à pivotement s'effectue manuellement pour les pieds arrière. Grâce à cette liaison à pivotement au plateau 2 porte-charge, chaque jeu de pieds est susceptible d'occuper une position d'appui au sol et une position effacée.

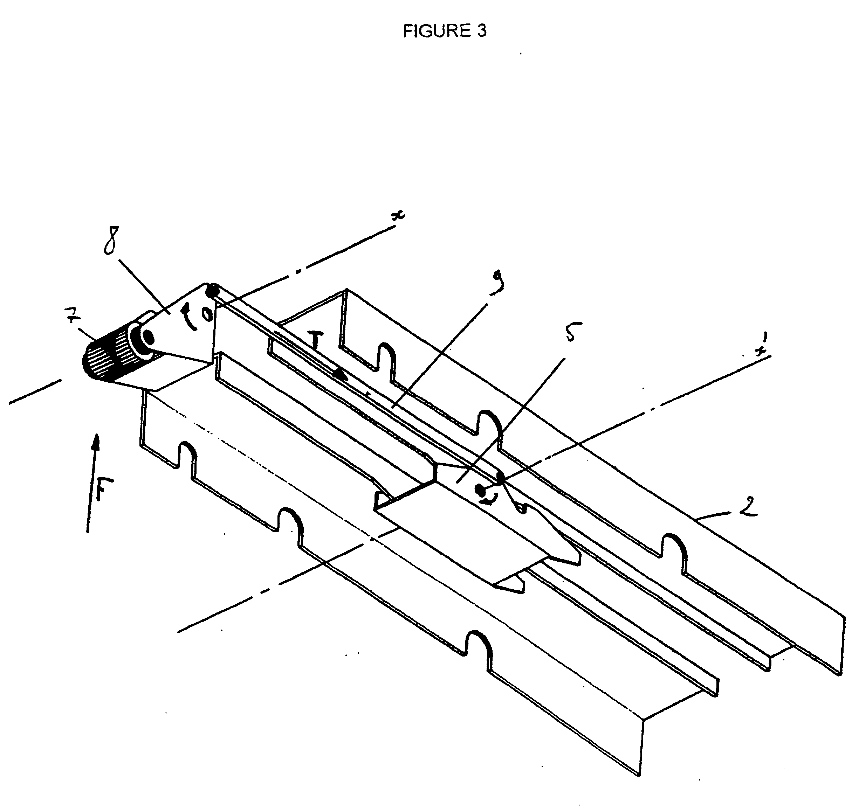

Pour assurer le maintien de chaque jeu de pieds porte-roue en position d'appui au sol, chaque paire avant 4A ou respectivement arrière 4B de pieds porte-roue est munie d'un dispositif 5, 6 ou respectivement 6, 13 déverrouillable de blocage des pieds. Une représentation partielle de ce dispositif de blocage est faite à la figure 3. Le dispositif de blocage des pieds avant 4A est constitué d'un crochet 5 déverrouillable solidarisant au plateau 2 porte-charge une jambe de force 6 couplée à son autre extrémité au bâti des pieds porte-roue avant 4A. Le déverrouillage du crochet 5 permet un déplacement à coulissement de la jambe de force, autorisant ainsi un déplacement à pivotement des pieds avant 4A. Le dispositif de blocage des pieds arrière 4B est constitué de manière analogue d'une jambe de force 6 s'étendant entre plateau 2 et bâti des pieds arrière 4B et d'un crochet déverrouillable manuellement représenté en 13 à la figure 2.

Les roues équipant le jeu de pieds porte-roue arrière 4B sont des roues orientables tandis que les roues équipant le jeu de pieds porte-roue avant 4A sont non orientables.

Chaque pied mobile avant 4A est déverrouillable de la position d'appui au sol à une position d'effacement par un organe de commande 7, 8 actionné par appui du plateau 2 porte-charge sur la surface 17 de réception du véhicule. Dans les exemples représentés, l'organe de commande du déverrouillage du dispositif de blocage des pieds avant en position déployée est constitué d'un organe de déplacement, tel qu'une roue 7, mobile dans une chape, représentée en 8 aux figures, montée à pivotement sous ledit plateau 2 porte-charge. Cette chape 8 est reliée au dispositif de blocage 5, 6 des pieds avant 4A par l'intermédiaire d'un organe de liaison 9, tel qu'une bielle, de sorte que le déplacement à pivotement de la chape 8 provoque un déplacement simultané de l'organe de verrouillage 5 du dispositif de blocage 5, 6 des pieds avant 4A générant ainsi le déverrouillage des pieds avant 4A. Ainsi, dans l'exemple représenté à la figure 3, l'effort F, appliqué sur la roue 7 et la chape 8 lors de l'appui du plateau 2 porte-charge sur la surface 17 de réception du véhicule, provoque la rotation de la chape 8 dans le sens de la flèche représentée à la figure 3 autour de l'axe X. Cette rotation de la chape 8 provoque une translation de la bielle 9 dans le sens de la flèche. Celle-ci provoque alors une rotation autour de l'axe X', dans le sens de la flèche représentée à la figure 3, de l'organe de verrouillage 5 du dispositif de blocage 5, 6 des pieds avant 4A. Grâce à cette conception de l'organe de commande, on obtient un déverrouillage automatique du dispositif de blocage 5, 6, autorisant ainsi un déplacement ultérieur à pivotement des pieds avant 4A.

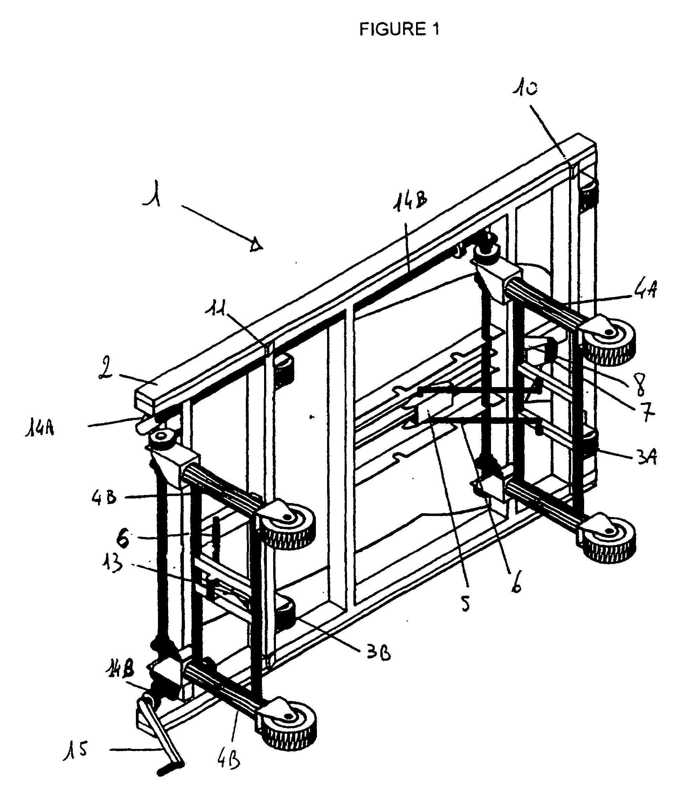

Toutefois, pour garantir toute la sécurité requise lors de ce déverrouillage, le plateau 2 est muni d'une première butée 10 représentée à la figure 1. Cette butée 10 est proche du bord frontal du plateau 2 porte-charge pour coopérer avec une butée 12 disposée sur la surface 17 de réception du véhicule et ainsi empêcher le recul intempestif du plateau 2 porte-charge en position effacée des pieds avant. En effet, le déverrouillage des pieds avant 4A de la position d'appui au sol à une position d'effacement ne peut être provoqué sur ladite surface 17 que lorsque la butée 10 a dépassé la butée 12 du fait du positionnement relatif de la butée 10, de la butée 12 et de l'organe de commande 7, 8. En conséquence, la butée 10, placée entre l'organe de commande 7, 8 et le bord frontal du plateau 2, est écartée de l'organe de commande 7, 8 d'une distance suffisante pour obtenir la coopération avec la butée 12 mentionnée ci-dessus. Par ailleurs, et de manière évidente à l'homme du métier, l'organe de commande 7, 8, en position verrouillée, fait saillie du plan défini par les roues 3A, 3B du plateau 2 servant au déplacement de ce dernier sur la surface 17. Par contre, l'organe de commande 7, 8 et la butée 10 sont disposés sensiblement dans le même plan.

Pour parfaire l'ensemble, le plateau 2 de charge est muni d'une deuxième butée 11 proche de son bord arrière et représentée à nouveau à la figure 1. Cette butée 11 coopère avec la butée 12 disposée sur la plate-forme de réception du véhicule pour assurer l'immobilisation du plateau 2 porte-charge en position de transport. Les pieds arrière 4B sont quant à eux effaçables par relèvement avec déverrouillage manuel du dispositif de blocage de la position d'appui au sol. Les pieds avant, en position effacée, occupent quant à eux, sous le plateau 2, une position parallèle audit plateau 2 porte-charge. Cette position d'effacement des pieds porte-roue avant est représentée à la figure 4D.

En pratique, le fonctionnement d'un tel chariot porte-charge embarquable est le suivant. Il convient tout d'abord de mettre en place l'ensemble des équipements nécessaires sur la surface 17 de réception du véhicule de transport. Pour ce faire, les butées 12 sont de préférence portées par deux rails 18 aptes à être agencés pour pouvoir être fixés sur la surface 17 de réception du véhicule en élévation du véhicule porte-charge. Il peut être également prévu, à l'arrière de la plate-forme ou surface 17 de réception du véhicule, une barre 16 de protection du pare-chocs, cette barre 16 étant escamotable. Une fois cet équipement mis en place de manière définitive, le chariot 1 porte-charge peut alors être embarqué dans le véhicule. Pour ce faire et comme le montre la figure 4A, le chariot est amené jusqu'à venir se positionner au moins partiellement au-dessus de la surface 17 de réception en élévation du véhicule comme le montre la figure 4B, les pieds 4A venant en butée contre l'arrière du véhicule. Pour ce faire, un réglage en hauteur des pieds avant 4A a été effectué pour permettre le passage du plateau 2 équipé de la butée 10 au-dessus de la butée 12 équipant la surface 17 du véhicule, cette butée 12 étant placée sur la trajectoire de la butée 10. Une fois cette introduction au moins partielle du plateau 2 réalisée, le plateau 2 porte-charge est abaissé à nouveau par réglage de la hauteur du jeu de pieds porte-roue avant 4A. Au cours de cet abaissement du plateau 2, l'organe de commande 7, 8 est actionné par appui du plateau 2 porte-charge sur la surface 17 de réception du véhicule. L'actionnement de cet organe de commande 7, 8 génère le déverrouillage du dispositif de blocage des pieds porte-roue avant. La poursuite de l'introduction du chariot 2 porte-charge à l'intérieur du véhicule provoque, par appui des pieds porte-roue avant 4A sur la barre 16 de protection du véhicule, le pivotement de ces derniers jusqu'à une position d'effacement dans laquelle les pieds avant 4A sont disposés sous le plateau du chariot sensiblement parallèlement à ce dernier. On continue alors l'avance du chariot jusqu'à ce que le jeu de pieds arrière 4B soit en contact avec la barre 16 de protection du pare-chocs du véhicule. Dans cette position, la deuxième butée 11 proche du bord arrière du plateau a également dépassé la butée 12 équipant la surface de réception en élévation du véhicule. L'organe de verrouillage du dispositif de blocage en position déployée des pieds arrière 4B est alors actionné manuellement après ajustement si nécessaire de la hauteur des pieds arrière 4B. Les pieds sont entraînés en rotation de 180 degrés pour venir occuper une position conforme à celle représentée à la figure 4D. Le chariot peut alors être à nouveau avancé à l'intérieur du véhicule pour pouvoir y être rentré complètement. La barre 16 de protection du pare-chocs escamotable est également déplacée à pivotement pour venir se loger à l'intérieur du véhicule. Elle permet d'empêcher tout mouvement du chariot dans le véhicule pendant le transport.

On constate, au regard du fonctionnement tel que décrit ci-dessus, que le chariot est parfaitement immobilisé à l'intérieur du véhicule du fait de la présence des butées 10, 11, 12. En effet, dans cette position en appui sur la surface 17 de réception en élévation, les butées 10, 11 sont positionnées sur la trajectoire de la butée 12 de sorte que tout recul intempestif du plateau 2 porte-charge en position effacée des pieds est impossible. Bien évidemment, pour la sortie du chariot, on procède de la même manière en déployant dans un premier temps les pieds arrière 4B, en assurant le réglage en hauteur dans le sens d'une extension de ces derniers par actionnement du vérin mécanique 14B pour permettre le passage de la butée 11 au-dessus de la butée 12 et assurer une sortie progressive du chariot jusqu'à ce que le chariot vienne en butée avec sa butée 10 contre la butée 12. Dans cette position, les pieds arrière étant en position d'extension relevés, le chariot est incliné vers les pieds avant 4A. Les pieds avant 4A se déploient sous l'effet de leur propre poids et se verrouillent automatiquement en position d'appui au sol. Il sont alors réglés en hauteur pour libérer la butée 10 de sa coopération avec la butée 12. Le chariot peut alors être entièrement sorti du véhicule. La venue en prise et le dégagement des butées 10, 12 s'effectuent dans ce cas uniquement par réglage en hauteur des pieds avant.

En conclusion, le chargement et le déchargement d'un tel chariot sont particulièrement aisés.

## Revendications

1. Chariot (1) porte-charge embarquable avec sa charge sur une surface (17) de réception en élévation d'un véhicule de transport, ce chariot (1) étant constitué d'un plateau (2) porte-charge équipé d'un jeu d'organes de roulement ou de glissement (3A, 3B) servant au déplacement du plateau (2) sur la surface (17) de réception en élévation et d'un jeu de pieds porte-roue respectivement avant (4A) et arrière (4B), réglables en hauteur et reliés à pivotement au plateau (2) porte-charge pour occuper une position d'appui au sol et une position effacée, les pieds porte-roue avant (4A) et arrière (4B) étant munis respectivement d'un dispositif (5, 6 ; 6, 13) déverrouillable de blocage des pieds au moins en position déployée,
**caractérisé en ce que** la paire de pieds avant (4A) cinématiquement solidaires et la paire de pieds arrière (4B) cinématiquement solidaires sont munies respectivement d'un dispositif (14A, 14B) de réglage en hauteur différencié mû en fonctionnement dans le sens d'une augmentation ou d'une réduction de la longueur des pieds, à l'état chargé ou non chargé du plateau (2), par un organe de commande (15) actionné par un opérateur pour obtenir un réglage indépendant de chaque paire de pieds du plateau (2) porte-charge, ce plateau (2) porte-charge étant muni d'une première butée (10) proche de son bord frontal avant pour coopérer avec une butée (12) disposée sur la surface (17) de réception du véhicule et ainsi empêcher le recul intempestif du plateau (2) porte-charge en position effacée des pieds avant (4A), la venue en prise ou respectivement le dégagement desdites butées (10), (12) étant obtenu par réglage de la hauteur d'au moins une paire de pieds (4A).

2. Chariot (1) porte-charge embarquable selon la revendication 1,
**caractérisé en ce que** le plateau (2) de charge est muni d'une deuxième butée (11) proche de son bord arrière, cette butée (11) coopérant avec la butée (12) disposée sur la surface (17) de réception du véhicule pour assurer l'immobilisation du plateau (2) porte-charge en position de transport.

3. Chariot (1) porte-charge embarquable selon l'une des revendications 1 et 2,
**caractérisé en ce que** les pieds arrière (4B) sont effaçables par relèvement avec déverrouillage manuel du dispositif de blocage (6, 13) de la position d'appui au sol.

4. Chariot (1) porte-charge embarquable selon l'une des revendications 1 à 3,
**caractérisé en ce que** les pieds avants (4A) en position effacée occupent, sous le plateau (2) porte-charge, une position parallèle audit plateau (2) porte-charge.

5. Chariot (1) porte-charge embarquable selon l'une des revendications 1 à 4,
**caractérisé en ce que** les paires de pieds avant (4A) et arrière (4B) sont réglables en hauteur à l'état chargé ou non chargé du plateau par l'intermédiaire de vérins (14A, 14B) mécaniques différenciés pour obtenir un réglage indépendant de chaque paire de pieds.

6. Chariot (1) porte-charge embarquable selon la revendication 5,
**caractérisé en ce que** les pieds porte-roue avant (4A) sont constitués chacun de deux tubes télescopiques animés d'un mouvement relatif axial lors de l'actionnement du vérin mécanique (14A) en prise avec l'un desdits tubes, ces tubes portant l'un une lumière de guidage d'un doigt porté par l'autre tube de sorte que chaque roue avant montée fixe sur l'un des tubes passe d'une position parallèle à l'axe longitudinal du plateau (2) porte-charge en position déployée des pieds avant (4A) à une position orthogonale à l'axe longitudinal du plateau (2) porte-charge en position effacée des pieds avant (4A).

7. Chariot (1) porte-charge embarquable selon l'une des revendications 1 à 6,
**caractérisé en ce que** les pieds mobiles avant (4A) sont déverrouillables de la position d'appui au sol à une position d'effacement par un organe de commande (7, 8) actionné par appui du plateau (1) porte-charge sur la surface (17) de réception du véhicule.

8. Chariot (1) porte-charge embarquable selon la revendication 7,
**caractérisé en ce que** l'organe de commande du déverrouillage du dispositif (5, 6) de blocage des pieds avant (4A) en position déployée est constitué d'un organe de déplacement, tel qu'une roue (7), mobile dans une chape (8) montée à pivotement sous ledit plateau (2) porte-charge, cette chape (8) étant reliée par l'intermédiaire d'un organe de liaison (9), tel qu'une bielle, au dispositif (5, 6) de blocage des pieds avant (4A), de sorte que le déplacement à pivotement de la chape (8) provoque un déplacement simultané de l'organe de verrouillage (5) du dispositif de blocage (5, 6) des pieds avant (4A) générant le déverrouillage des pieds avant (4A).

## Patentansprüche

1. Mit seiner Last auf eine erhöhte Ladefläche (17) eines Transportfahrzeugs verladbares Lastaufnahmefahrzeug (1), wobei dieses Lastaufnahmefahrzeug (1) aus einer Lastaufnahmeplatte (2) besteht, welche mit einem Satz von Roll- oder Gleitorganen (3A, 3B) zur Verschiebung der Platte (2) auf der erhöhten Ladefläche (17) und mit einem Satz von vorderen (4A) beziehungsweise hinteren (4B) Radhaltefüßen ausgestattet ist, welche in der Höhe einstellbar sind und schwenkbar mit der Lastaufnahmeplatte (2) verbunden sind, um eine Abstützposition auf dem Boden und eine eingezogene Stellung einzunehmen, wobei die vorderen (4A) und hinteren (4B) Radhaltefüße jeweils mit einer entriegelbaren Vorrichtung (5, 6; 6, 13) zur Blockierung der Füße zumindest in der ausgefahrenen Stellung versehen sind,
**dadurch gekennzeichnet, dass** das Paar von kinematisch verbundenen vorderen Füßen (4A) und das Paar von kinematisch verbundenen hinteren Füßen (4B) jeweils mit separaten Vorrichtungen (14A, 14B) zur höhenmäßigen Einstellung versehen sind, welche bei Benutzung im Sinne einer Verlängerung oder einer Verringerung der Länge der Füße im beladenen oder nicht beladenen Zustand der Platte (2) durch ein von einer Bedienperson betätigtes Steuerungsorgan (15) bewegt wird, um eine unabhängige Einstellung jedes Paares von Füßen der Lastaufnahmeplatte (2) zu erzielen, wobei diese Lastaufnahmeplatte (2) mit einem ersten Anschlag (10) versehen ist, welcher nahe ihrem vorderen Stirnrand angeordnet ist, um mit einem Anschlag (12) zusammenzuwirken, welcher auf der Ladefläche (17) des Fahrzeugs angeordnet ist, und somit das ungewollte Zurücksetzen der Lastaufnahmeplatte (2) in der eingezogenen Stellung der vorderen Füße (4A) zu verhindern, wobei die genannten Anschläge (10), (12) miteinander in Eingriff beziehungsweise außer Eingriff gebracht werden, indem mindestens ein Paar von Füßen (4A) in der Höhe eingestellt wird.

2. Verladbares Lastaufnahmefahrzeug (1) nach Anspruch 1, **dadurch gekennzeichnet, dass** die Lastaufnahmeplatte (2) mit einem zweiten Anschlag (11) versehen ist, welcher nahe ihrem hinteren Rand angeordnet ist, wobei dieser Anschlag (11) mit dem auf der Ladefläche (17) des Fahrzeugs angeordneten Anschlag (12) zusammenwirkt, um das Festsetzen der Lastaufnahmeplatte (2) in der Transportstellung zu gewährleisten.

3. Verladbares Lastaufnahmefahrzeug (1) nach einem der Ansprüche 1 und 2, **dadurch gekennzeichnet, dass** die hinteren Füße (4B) durch Anheben mit manueller Entriegelung der Vorrichtung (6, 13) zur Blockierung der Abstützposition auf dem Boden einziehbar sind.

4. Verladbares Lastaufnahmefahrzeug (1) nach einem der Ansprüche 1 bis 3, **dadurch gekennzeichnet, dass** die vorderen Füße (4A) in der eingezogenen Stellung unter der Lastaufnahmeplatte (2) eine zu der genannten Lastaufnahmeplatte (2) parallele Stellung einnehmen.

5. Verladbares Lastaufnahmefahrzeug (1) nach einem der Ansprüche 1 bis 4, **dadurch gekennzeichnet, dass** die Paare von vorderen Füßen (4A) und hinteren Füßen (4B) im beladenen oder nicht beladenen Zustand der Platte über separate mechanische Heber (14A, 14B) höhenmäßig einstellbar sind, um eine unabhängige Einstellung des jeweiligen Fußpaares zu erreichen.

6. Verladbares Lastaufnahmefahrzeug (1) nach Anspruch 5, **dadurch gekennzeichnet, dass** die vorderen Radhaltefüße (4A) jeweils aus zwei teleskopischen Rohren bestehen, welche bei der Betätigung des mechanischen Hebers (14A) in Eingriff mit einem der genannten Rohre eine relative axiale Bewegung erfahren, wobei eines dieser Rohre ein Langloch zur Führung eines Fingers aufweist, welcher von dem anderen Rohr getragen wird, so dass jedes fest auf einem der Rohre montierte vordere Rad von einer Stellung, welche in der ausgefahrenen Stellung der vorderen Füße (4A) parallel zur Längsachse der Lastaufnahmeplatte (2) ist, zu einer Stellung wechselt, welche in der eingezogenen Stellung der vorderen Füße (4A) orthogonal zur Längsachse der Lastaufnahmeplatte (2) ist.

7. Verladbares Lastaufnahmefahrzeug (1) nach einem der Ansprüche 1 bis 6, **dadurch gekennzeichnet, dass** die beweglichen vorderen Füße (4A) von der Abstützposition auf dem Boden in eine eingezogene Stellung durch ein Steuerungsorgan (7, 8) entriegelbar sind, das **dadurch** betätigt wird, dass die Lastaufnahmeplatte (1) sich auf die Ladefläche (17) des Fahrzeugs abstützt.

8. Verladbares Lastaufnahmefahrzeug (1) nach Anspruch 7, **dadurch gekennzeichnet, dass** das Organ zur Steuerung der Entriegelung der Vorrichtung (5, 6) zur Blockierung der vorderen Füße (4A) in der ausgefahrenen Stellung durch ein Verschiebeglied, beispielsweise ein Rad (7), gebildet ist, welches in einem Gabelgelenk (8) beweglich ist, welcher schwenkbar unter der genannten Lastaufnahmeplatte (2) montiert ist, wobei dieses Gabelgelenk (8) über ein Verbindungsglied (9), beispielsweise eine Kuppelstange, mit der Vorrichtung (5, 6) zur Blockierung der vorderen Füße (4A) verbunden ist, so dass die Schwenkbewegung des Gabelgelenks (8) eine gleichzeitige Bewegung des Verriegelungsorgans (5) der Vorrichtung (5, 6) zur Blockierung der vorderen Füße (4A) verursacht, welche Bewegung die Entriegelung der vorderen Füße (4A) bewirkt.

## Claims

1. Load-bearing trolley (1) that can be loaded with its load onto an elevated accommodating surface (17) of a transport vehicle, this trolley (1) consisting of a load-bearing platform (2) equipped with a set of rolling or sliding members (3A, 3B) serving for movement of the platform (2) over the elevated accommodating surface (17) and with a set of front (4A) and rear (4B) wheel-bearing legs, respectively, which are adjustable in height and connected to the load-bearing platform (2) such that they can pivot in order to assume a position bearing on the ground and a clear position, the front (4A) and rear (4B) wheel-bearing legs being equipped with, respectively, a device (5, 6; 6, 13) that can be released for locking the legs at least in the deployed position,
**characterised in that** the pair of kinematically integral front legs (4A) and the pair of kinematically integral rear legs (4B) are equipped, respectively, with a device (14A, 14B) for adjusting the differentiated height operated in the direction of an increase or a decrease in the length of the legs, in the loaded or non-loaded state of the platform (2), by a control member (15) actuated by an operator to obtain independent adjustment of each pair of legs of the load-bearing platform (2), this load-bearing platform (2) being equipped with a first stop (10) close to its front leading edge to interact with a stop (12) arranged on the accommodating surface (17) of the vehicle and thus to prevent the inadvertent backward movement of the load-bearing platform (2) with the front legs (4A) in the clear position, the engagement or disengagement, respectively, of the said stops (10), (12) being obtained by adjustment of the height of at least one pair of legs (4A).

2. Loadable load-bearing trolley (1) according to Claim 1,
**characterised in that** the load platform (2) is equipped with a second stop (11) close to its rear edge, this stop (11) interacting with the stop (12) arranged on the accommodating surface (17) of the vehicle to ensure immobilisation of the load-bearing platform (2) in the transport position.

3. Loadable load-bearing trolley (1) according to one of Claims 1 and 2,
**characterised in that** the rear legs (4B) can be brought into the clear position by lifting from the position bearing on the ground with manual release of the locking device (6, 13).

4. Loadable load-bearing trolley (1) according to one of Claims 1 to 3,
**characterised in that**, in the clear position, the front legs (4A) occupy, under the load-bearing platform (2), a position parallel to the said load-bearing platform (2).

5. Loadable load-bearing trolley (1) according to one of Claims 1 to 4,
**characterised in that** the pairs of front (4A) and rear (4B) legs can be adjusted in height in the loaded or non-loaded state of the platform via differentiated mechanical actuators (14A, 14B) to obtain independent adjustment of each pair of legs.

6. Loadable load-bearing trolley (1) according to Claim 5,
**characterised in that** the front wheel-bearing legs (4A) each consist of two telescopic tubes driven in a relative axial movement during activation of the mechanical actuator (14A) engaged with one of the said tubes, these tubes having a guide slot for a finger on the other tube, such that each front wheel mounted in a fixed position on one of the tubes moves from a position parallel to the longitudinal axis of the load-bearing platform (2) when the front legs (4A) are in the deployed position into a position orthogonal to the longitudinal axis of the load-bearing platform (2) when the front legs (4A) are in the clear position.

7. Loadable load-bearing trolley (1) according to one of Claims 1 to 6,
**characterised in that** the front movable legs (4A) can be released from the position bearing on the ground into a clear position by a control member (7, 8) activated when the load-bearing platform (1) bears on the accommodating surface (17) of the vehicle.

8. Loadable load-bearing trolley (1) according to Claim 7,
**characterised in that** the control member for releasing the device (5, 6) for locking the front legs (4A) in the deployed position consists of a movement member, such as a wheel (7), able to move in a fork joint (8) mounted below the said load-bearing platform (2) such that it can pivot, this fork joint (8) being connected via a link member (9), such as a connecting rod, to the device (5, 6) for locking the front legs (4A), such that the pivoting movement of the fork joint (8) gives rise to a simultaneous movement of the locking member (5) of the locking device (5, 6) for the front legs (4A), causing release of the front legs (4A).
